# EUROPEAN PATENT SPECIFICATION

(11) **EP 2 537 896 B1**
(45) Date of publication and mention of the grant of the patent: **26.07.2017**
(21) Application number: 12169605.8
(22) Date of filing: 25.05.2012
(51) Int. Cl.: C08L 63/00, C04B 16/04, C04B 24/28, C04B 40/00, C04B 28/02, C04B 103/00

(54) **Redispersible epoxy powder by interfacial reaction**
Redispergierbares Epoxypulver durch Grenzflächenreaktion
Poudre époxy redispersable par réaction interfaciale

(30) Priority: 23.06.2011 US 201161500260 P
(43) Date of publication of application: 26.12.2012
(73) Proprietor: Dow Global Technologies LLC, Midland, MI 48674 (US)
(72) Inventor: Chen, Liang, Midland, MI Michigan 48642 (US); Hong, Liang, Midland, MI Michigan 48640 (US); Sekharan, Maneh Nadupparambil, Midland, MI Michigan 48642 (US)
(74) Representative: Houghton, Mark Phillip

(56) References cited:
- EP-A1- 0 723 975
- US-A1- 2001 024 644
- US-A1- 2010 197 831
- Sichina W. J.: "Characterization of Epoxy Resins Using DSC", Thermal Support - PerkinElmer , 2000, XP002685904, Retrieved from the Internet: URL:http://www.thermalsupport.com/filemana ger/file_download.php?fi=19 [retrieved on 2012-10-24]

## Description

### FIELD OF THE INVENTION

The present invention relates to redispersible polymer powder compositions which are prepared from an epoxy resin, a colloidal stabilizer, and an interfacial crosslinking agent for use in cement compositions.

### BACKGROUND OF THE INVENTION

In construction applications, mortars may be prepared with cement, sand, and organic polymer. To reduce shipping costs, the polymer can be shipped and added in dry form as a redispersible polymer powder. Redispersible polymer powders are used as binders to improve the adhesion of cementitious adhesive formulations. The powdered form of the polymer is generally produced by spray drying a liquid polymer composition to obtain a free flowing powder. To perform its function in the application formulation to which it is added, such as concrete, it is desired that in the application formulation the polymer powder is easily redispersible.

Redispersible polymer powders made from emulsion polymers, such as vinyl acetate/ethylene copolymers, various acrylic polymers, styrene/butadiene copolymers, and vinyl acetate/versatic acid vinyl ester copolymers are widely used in various construction applications, such as cement based tile adhesives (CBTA), and self level flooring compounds (SLFC) to improve the mechanical properties of the cementitious composition. To further improve mechanical and chemical properties such as hydraulic stability, compression, abrasion resistance, solvent resistance, and chemical and stain resistance of cementitious compositions, it would be desirable to make redispersible polymer powders from crosslinkable polymers.

Epoxies are crosslinkable polymers which are used to impart toughness, reduced water permeability, rapid setting, and chemical and stain resistance to cementitious materials including concrete. Epoxies are also used in the repair of concrete and cement mortars and render or coatings. Epoxy functional groups have been incorporated into the emulsion polymers, such as by the use of glycidyl methacrylate, and a polymerizable epoxy functional monomer or by blending a very low molecular weight liquid epoxy with an acrylic latex prior or after the polymerization step. However, the epoxy functional group content has been low with little gain in desirable properties which may be potentially imparted by a crosslinkable polymer. Another approach is to use a water borne epoxy emulsion or liquid epoxy resin, and a water borne hardener for combining with cement, which is a three-part system, but it is difficult to handle in terms of transportation, mixing, pot-life, equipment contamination, etc. It has been found that drying of a liquid epoxy resin or liquid epoxy emulsion, even with drying aids and anti-caking agents, results in unredispersible lumps instead of a powder.

U.S. Patent No. 4,123,403 to Warner et al discloses the preparation of an aqueous epoxy resin microsuspension having controlled particle size by a continuous extrusion process. The polymer to be dispersed may be any normally solid, e.g., melting above about 20°C, preferably between about 50°C and about 200°C, and especially between about 80°C and about 200°C, thermoplastic resin whose degradation point is at a somewhat higher temperature than its melting point. It is disclosed that the polymer to be dispersed need not be pure polymer, and for example the heat plastified polymer can contain conventional additives such as pigments, dyes, fillers, stabilizers, fire retardants, emulsifying agents, and the like. Preferred emulsifiers are those that function as protective colloids, such as a polyvinyl alcohol, preferably having a molecular weight of at least about 50,000, especially of at least about 100,000. The mechanical dispersion may be conducted at a temperature which is at least 20°C, especially at least 40°C above the melting point of the resin, where the melting point is defined as the temperature at which the resin undergoes a phase change from a solid to a flowable viscous liquid. It is disclosed that finely divided polymer powder can be obtained from the aqueous polymer microsuspensions by dewatering the microsuspension in a conventional manner, is disclosed, can be employed in an electrostatic coating or printing process and as plastic pigments in paper coatings.

In Example 1 of the Warner et al patent, an aqueous solution of polyvinyl alcohol of about 120 kg mol⁻¹, 88% hydrolyzed is used at 5.7 wt% polyvinyl alcohol relative to solid epoxy resin, which has a softening point of 72°C, and the mechanical dispersion process is carried out at a temperature at conversion from polymer-continuous to polymer-discontinuous of about 102°C. The volume average particle diameter of the dispersed solid polymer particles after cooling is about 0.55 micron. However, while the resin has a softening point of 72°C, the glass transition temperature is significantly lower, and the polymer particles produced would exhibit poor redispersibility. The present inventors have found that epoxy resins having a low glass transition temperature (Tg)of less than about 50°C exhibit poor redispersibility even when a colloidal stabilizer, such as polyvinyl chloride is employed in the production of an aqueous dispersion of the epoxy resin. Additionally, Warner et al does not disclose use of a spray dried, redispersible polymer powder in a cementitious composition.

In the present invention, it has been surprisingly found, that use of a thermosettable or crosslinkable epoxy resin having a low glass transition temperature (Tg) with a polyvinyl alcohol as a colloidal stabilizer or spray drying aid, and an interfacial crosslinking agent unexpectedly provides both excellent redispersibility and significant stability in cement applications.

### SUMMARY OF THE INVENTION

The present invention, in its various aspects, is as set out in the accompanying claims.

The present invention provides a redispersible polymer powder (RDP) comprised of a co-dried admixture of a thermosettable epoxy resin having a glass transition temperature (Tg) of less than 50°C, for example from 20°C to 45°C, generally from 20°C to 40°C, a colloidal stabilizer comprising a polyvinyl alcohol in an amount of the polyvinyl alcohol of at least 2% by weight, preferably from 5% by weight to 35% by weight, more preferably from 6% by weight to 25% by weight, based upon the weight of the thermosettable epoxy resin, and a multifunctional, water soluble interfacial crosslinking agent which does not substantially increase the epoxy equivalent weight of the cross linkable epoxy resin. The interfacial crosslinking agent is selected from a small molecule with at most one reactive amine group (NH₂ or NH), such as an amino acid, and an amino-sulfonic acid, or a water soluble polymer having at least one charged group or ionic group, reactive with or having a strong attachment to an epoxy group, such as a polyacrylic acid, polymethacrylic acid, polyvinylphosphonic acid, polystyrene sulfonic acid, polyacrylamide, copolymers thereof, and salts thereof. The interfacial crosslinking agent is employed in an amount of at least 0.1% by weight, preferably from 0.3% by weight to 5% by weight, based upon the weight of the thermosettable epoxy resin. It is believed that the interfacial crosslinking agent forms a skin on, or is absorbed onto or hardens only the surface of particles of the thermosettable epoxy resin. In accordance with the present invention, the RDP may or may not contain a hardener or curing agent. In embodiments, curing agents or hardeners may be formulated into the system by dry mixing with the crosslinkable epoxy powder which is produced by spray drying, but not before spray drying. In accordance with the present invention, the RDP may be hardened, cured, or crosslinked by cement ingredients when admixed with water. The water redispersible polymer powder of the present invention exhibits unexpectedly superior redispersibility and good stability in cementicious formulations. The thermosettable epoxy resin may have an average particle size of from 0.05µm to 5µm, preferably from 0.1µm to 3µm, most preferably from 0.15µm to 2µm.

In an aspect of the present invention, the redispersible polymer powder may be produced by drying an aqueous mixture of the thermosettable epoxy resin, the colloidal stabilizer comprising the PVOH, and the interfacial crosslinking agent to obtain the water redispersible polymer powder. An aqueous dispersion of the thermosettable epoxy resin may be provided by mechanical dispersion or by melt kneading, or any other high shear mixing technology, and the colloidal stabilizer and the interfacial crosslinking agent may be admixed with the thermosettable epoxy resin before and/or during formation of the aqueous dispersion of the thermosettable epoxy resin. Additional stabilizer may be post added to the aqueous dispersion after it is formed. Then, the aqueous dispersion or aqueous mixture of the thermosettable epoxy resin, the colloidal stabilizer, and the interfacial crosslinking agent may be spray dried to obtain the water redispersible polymer powder. In preferred embodiments, the aqueous mixture of the thermosettable epoxy resin is obtained by mechanical dispersion of the thermosettable epoxy resin and at least a portion of the colloidal stabilizer to obtain an epoxy resin dispersion, and admixing the epoxy resin dispersion with the interfacial crosslinking agent and any remaining portion of the colloidal stabilizer. The aqueous dispersion or aqueous mixture of the thermosettable epoxy resin, and the redispersible polymer powder are each obtained without curing, crosslinking or hardening of the thermosettable epoxy resin, and without a hardener or curing agent for the thermosettable epoxy resin. Use of PVOH, preferably partially hydrolyzed PVOH, as a colloidal stabilizer, and use of an interfacial crosslinking agent with a thermosettable epoxy resin having a glass transition temperature (Tg) of less than 50 °C, provides excellent redispersibility for thermosettable epoxy resins without adversely affecting spray drying while achieving good stability in cement based compositions.

In another aspect of the present invention, a dry mix formulation, or a cement composition such as a cement based tile adhesive, may be produced by admixing cement ingredients with the water redispersible polymer powder made from a thermosettable, curable, hardenable epoxy resin to obtain a composition, such as a dry mortar mix, which exhibits good stability in dry form. The crosslinkable epoxy resin or redispersible polymer powder may be cured, crosslinked or hardened by the cement ingredients when the dry mix composition is admixed with water but not prior to admixing with water.

### DETAILED DESCRIPTION OF THE INVENTION

Unless otherwise indicated, all temperature and pressure units are room temperature and standard pressure (STP). All ranges recited are inclusive and combinable.

All phrases comprising parentheses denote either or both of the included parenthetical matter and its absence. For example, the phrase "(meth)acrylate" includes, in the alternative, acrylate and methacrylate. methacrylic, and mixtures thereof.

As used herein, unless otherwise indicated, the phrase "molecular weight" refers to a number average molecular weight as measured in a conventional manner. The number average molecular weight is the ordinary arithmetic mean or average of the molecular weights of the individual macromolecules. It is determined by measuring the molecular weight of n polymer molecules, summing the weights, and dividing by n. The number average molecular weight of a polymer can be determined by gel permeation chromatography, viscometry (Mark-Houwink equation), and all colligative methods like vapor pressure osmometry or end-group determination. For polyvinyl alcohol, the PVOH molecular weight, unless otherwise indicated, means the mean weight of the molar masses, Mw, determined by gel permeation chromatography (GPC) combined with static light scattering (absolute method) on re-acetylized specimens. The accuracy of the Mw values is estimated at ±15%. For epoxy resins, unless otherwise indicated, the molecular weight may mean the formula weight.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, unless otherwise indicated, the measured glass transition temperature (Tg) is used. As used herein the term "calculated T_{g}" refers to the T_{g} of a polymer calculated by using the Fox equation (T. G. Fox, Bull. Am. Physics Soc., Volume 1, Issue No. 3, page 123 (1956). As used herein the term "measured Tg" means a T_{g} that is measured using differential scanning calorimetry or DSC (rate of heating 10°C per minute, T_{g} taken at the midpoint of the inflection.)

As used herein, the phrase "wt.%" stands for weight percent.

As used herein, unless otherwise indicated, the phrase "average particle size", refers to the particle diameter or the largest dimension of a particle in a distribution of powder particles as determined by laser light scattering such that 50 wt. % of the particles in the distribution are smaller than the particle and 50 wt.% of the particles in the distribution are larger than the particle. The particle size distribution may be measured using a Coulter LS 230 particle size analyzer, a product of Beckman Coulter (Brea, California) per manufacturer's recommended Procedures via laser scattering. The scattering light from particles through laser scattering and polarization intensity differential scattering is collected as a function of angle, and subsequently converted to a particle size distribution.

The present inventors have found that cross-linkable redispersible polymer powders, which can be cross-linked, cured or hardened by cement ingredients upon water addition, rather than by epoxy hardeners or curing agents which are generally employed with epoxy resins, can be produced from a thermosettable, non-hardened or non-cured epoxy resin having a glass transition temperature (Tg) of less than 50 °C, when a colloidal stabilizer comprising a polyvinyl alcohol, preferably a partially hydrolyzed polyvinyl alcohol, in an amount of the polyvinyl alcohol of at least 2% by weight, and an interfacial crosslinking agent in an amount of at least 0.1% by weight, each based upon the weight of the thermosettable epoxy resin, are both employed. Although curing of the epoxy is preferred by cement ingredients, it is possible to add epoxy curing agents such as an amine, mercaptan, or anhydride curing agent into a cement-epoxy powder mixture. The redispersible epoxy powders of the present invention may be produced by spray drying, exhibit excellent redispersibility, and improve mechanical and chemical properties such as hydraulic stability, compression, abrasion resistance, solvent resistance, and chemical and stain resistance of cementitious compositions.

Within the meaning of the present invention an epoxy resin for use herein is a polyglycidyl ether of a polyhydroxy compound, such as a monomeric polyhydroxy compound e.g. a polyhydroxy hydrocarbon, or a hydroxyl-functional oligomer. Preferably, the polyglycidyl ether is an oligomeric or polymeric compound having at least 2 hydroxyl groups. Generally, the epoxy resin is the reaction product of a polyhydroxy compound, such as a monomeric polyhydroxy compound e.g. a polyhydroxy hydrocarbon, or a hydroxyl-functional oligomer, with an epihalohydrin, such as epichlorohydrin. The polyhydroxy hydrocarbon can be substituted, if desired, with one or more non-interfering substituents, such as halogen atoms, ether radicals, lower alkyls and the like. Examples of polyhydroxy hydrocarbons include polyhydric phenols and polyhydric alcohols. Specific nonlimiting examples of monomeric polyhydroxy compounds are resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, tetramethylbiphenol, tetramethyl-tetrabromobiphenol, tetramethyltribromobiphenol, tetrachlorobisphenol A, 4,4'- sulfonyldiphenol, 4,4-oxydiphenol, 4,4'-dihydroxybenzophenone, 9,9'- bis(4-hydroxyphenyl)fluorine, 4,4'-dihydroxybiphenyl, and 4, 4'-dihydroxy-α-methylstilbene. Examples of hydroxyl-functional oligomers include phenol-formaldehyde novolak resins, alkyl substituted phenol-formaldehyde resins, phenol-hydroxybenzaldehyde resins, cresol-hydroxybenzaldehyde resins, dicyclopentadiene-phenol resins, and dicyclopentadiene-substituted phenol resins. The polyglycidyl ethers can be prepared in conventional manner by reacting an epihalohydrin, preferably epichlorohydrin, with the polyhydroxy compound including a halogenated polyhydroxy compound under such conditions to prepare the desired product. Such preparations are well known in the art (see for example US-A-5,118,729). Modified epoxy resins such as epoxy resins wherein the above mentioned fundamental reactants have been substituted by other compounds are also encompassed by the term "epoxy resin." Oligomers and polymers obtained by free radical polymerization of monomer mixtures comprising ethylenically unsaturated epoxy compounds are not included by the definition of epoxy resin herein.

In accordance with the present invention, the polyhydroxy compound used to prepare the epoxy resin is a polyhydroxy hydrocarbon, preferably an aromatic dihydroxy compound, such as bisphenol A and/or bisphenol F. An oligomeric compound such as a phenol-formaldehyde novolac may be used as a polyhydroxy compound. Preferred examples of epoxy resins for use in the present invention include the diglycidyl ether of bisphenol A which is an oligomer of diglycidylether of bisphenol A, typically the reaction product of epichlorohydrin and bisphenol A; the diglycidyl ether of bisphenol F which is an oligomer of diglycidyl ether of bisphenol F, typically the reaction product of epichlorohydrin and bisphenol F, a mixed diglycidyl ether of bisphenol A and F, which is an oligomer of diglycidyl ether of bisphenol A and F, typically the reaction product of epichlorohydrin and a mixture of bisphenol A and F; the diglycidyl ether of a phenol-formaldehyde novolak, typically the reaction product of epichlorohydrin and a phenol-formaldehyde novolak; and modified epoxy resins such as epoxy resins, e.g. bisphenol A based epoxy resins, modified with an epoxy functional surfactant, typically an epoxy functional nonionic or epoxy functional anionic surfactant, and/or poly(alkylene glycol) epoxide, typically poly(propylene glycol) epoxide or poly(ethylene glycol) epoxide. In embodiments of the invention, the thermosettable epoxy resin is a linear, non-cross-linked polymer of bisphenol A and epichlorohydrin having terminal epoxide groups. Specific examples of thermosettable epoxy resins which may be employed herein are: a) D.E.R. 661, a solid epoxy resin of low molecular weight, which is the solid reaction product of epichlorohydrin and bisphenol A, having a softening point of 75°C to 85°C as measured by ASTM D-3104, a T_{g} of 41°C, an epoxide equivalent weight of 500g/eq to 560g/eq as measured by ASTM D-1652, an epoxide percentage of 7.7% to 8.6%, as measured by ASTM D-1652, an epoxide group content of 1780mmol/kg to 2000 mmol/kg as measured by ASTM D-1652, a solution viscosity @ 25°C of 165cSt to 250cSt (40 wt% in diethylene glycol monobutyl ether as measured by ASTM D-445, a melt viscosity @ 150°C of 400cSt to 800 cSt as measured by ASTM D-4287, a softening point of 100°C to 110°C as measured by ASTM D-3104, a color (Platinum Cobalt) of 100 Max.(40 wt% in diethylene glycol monobutyl ether) as measured by ASTM D-1209, and a shelf life of 24 months, and b) D.E.R. 331, a liquid epoxy resin, which is the liquid reaction product of epichlorohydrin and bisphenol A, which crystallizes at a temperature of less than 25°C having an epoxide equivalent weight of 182g/eq to 192g/eq, and a glass transition temperature of -18°C, each commercially available from The Dow Chemical Company, Midland, Michigan, U.S.A..

Preferably, the epoxide equivalent weight of the epoxy resin may be from 175g/eq to 800g/eq, more preferably from 200g/eq to 600g/eq, most preferably from 450g/eq to 575g/eq as determined according to ASTM D 1652.

The monomers, comonomers or compounds and their weight proportions and amounts may be chosen so as to make a thermosettable epoxy resin having a glass transition temperature (Tg) of less than 50°C, for example from 20°C to 45°C, generally from 20°C to 40°C. It has been found that as the T_{g} of the epoxy resin decreases below 50°C, redispersibility of the spray dried powder decreases with lumping tending to occur if an interfacial crosslinking agent is not employed with the colloidal stabilizer. The interfacial crosslinking agent may be employed with the colloidal stabilizer when the thermosettable epoxy resin has a (Tg) of 50 °C or more. However, it has been found that the interfacial crosslinking agent is not needed because the colloidal stabilizer alone provides excellent redispersibility when a thermosettable epoxy resin having thermosettable epoxy resin having a glass transition temperature (Tg) of at least 50 °C is employed. If the T_{g} of the epoxy resin is too high for use in cement compositions, end use properties may suffer, such as flexibility, and film-forming properties, especially in cold temperatures. The T_{g} of the copolymers can be determined in a known manner by differential scanning calorimetry (DSC).

It is understood that the polymer composition according to the present invention may comprise a single epoxy polymer or a mixture or blend of various epoxy polymers as described above.

The interfacial crosslinking agent employed in the present invention unexpectedly imparts redispersibility to RDPs made from an epoxy resin having a T_{g} less than 50 °C. The interfacial crosslinking agent, it is believed, forms a skin on, or is absorbed onto or hardens only the surface of the particles of the thermosettable epoxy resin so as to reduce surface stickiness and agglomeration of particles, or inter-particle bonding or adhesion to increase surface charge to enhance colloidal stability and improve redispersibility. The interfacial crosslinking agent is believed to undergo an interfacial reaction with the cross-linkable epoxy resin, but does not or substantially does not cure or harden the epoxy resin, so that it remains at least substantially cross-linkable, curable or hardenable in the RDP. The interfacial crosslinking agent does not substantially increase the epoxy equivalent weight of the cross linkable epoxy resin, whereas a conventional epoxy curing agent such as a polyfunctional amine may cure or harden the epoxy resin throughout the epoxy resin particles and substantially increase the epoxy equivalent weight of the epoxy resin due to the curing or hardening. Generally, the interfacial crosslinking agent employed may increase the epoxy equivalent weight of the epoxy resin by less than 15%, preferably less than 10% of the epoxy equivalent weight of the epoxy resin prior to interaction with the interfacial crosslinking agent. It is believed that in embodiments of the invention, rapid reaction occurs only at the interface between a solution of the interfacial crosslinking agent and the crosslinkable epoxy resin, with the interaction or reaction limited to the epoxy resin particle surface, which may create a partial thin polymer film or membrane. For example, as the polymerization reaction proceeds, an interfacial film may become a barrier that slows further reaction; hence interfacial polymer films can be exquisitely thin (e.g. less than 20nm). In embodiments of the invention, the nature and/or the amount of the interfacial cross-linking agent does not cause substantial crosslinking, curing or hardening throughout the crosslinkable epoxy resin particles.

The water soluble, multifunctional interfacial crosslinking agent does not substantially increase the epoxy equivalent weight of the crosslinkable epoxy resin, and leaves a substantial portion of the epoxy resin crosslinkable. For example, a small molecule or polymer which increases the epoxy equivalent weight less than 15%, preferably less than 10%, may be employed. The interfacial crosslinking agent may be a bi-functional or multi-functional reactant having one or more functional groups, such as an amine group, thiol group, carboxylic acid group, sulfonic acid group, or other group which is slowly or rapidly reactive with or strongly attachable to an epoxy group, preferably a charged group or ionic group, such as a neutralized carboxylic acid group, or amino group. Preferably, the interfacial crosslinking group is solid at room temperature. The interfacial crosslinking agent should not provide interparticle crosslinking or deep penetration crosslinking into the polymer particles, which would decrease crosslinkability, and tend to increase agglomeration and reduced redispersibility. For example, a conventional polyamine curing agent or hardener would react rapidly and tend to completely or substantially harden or cure the epoxy resin throughout the epoxy resin particles, and would tend to crosslink different particles together to cause particle agglomeration rather than to just provide a reaction only at the particle surface without interparticle crosslinking. The interfacial crosslinking agents which may be employed in the present invention are selected from water soluble, multifunctional small molecules with at most one reactive amine group (NH₂ or NH), such as an amino acid, an amino-sulfonic acid, derivatives thereof ,salts thereof, and mixtures thereof, and water soluble multifunctional polymers having at least one charged group or ionic group, reactive with or having a strong attachment to an epoxy group, such as a polyacrylic acid, polymethacrylic acid, polyvinylphosphonic acid, polystyrene sulfonic acid, polyacrylamide, water soluble copolymers thereof, salts thereof, and mixtures thereof. Preferred interfacial crosslinking agents for use herein include amino acids, and salts thereof, such as glycine, amino-sulfonic acids such as taurine or 2-aminoethanesulfonic acid, and polyfunctional acids, such as polyacrylic acid, salts thereof, and mixtures thereof. The interfacial crosslinking agent may be employed in an amount of at least 0.1% by weight, preferably from 0.3% by weight to 5% by weight, based upon the weight of the thermosettable epoxy resin.

In accordance with the present invention, the colloidal stabilizer may include a polyvinyl alcohol (PVOH) alone, or in combination with other conventional colloidal stabilizers, which do not adversely affect spray drying. In other embodiments of the invention, a non-PVOH colloidal stabilizer which acts as a surfactant at a high temperature, and is capable of dispersing the epoxy resin in water at a temperature above the T_{g} of the epoxy resin, such as above 100°C, may be used without PVOH. PVOH which may preferably be employed in the present invention may have a viscosity DIN 53015 ranging from 2 ± 0.5 mPa-s to 18 ± 0.5 mPa-s (4% aqueous solution at 20 °C) or more, a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O), such as MOWIOL 4-88, MOWIOL 8-88, MOWIOL 13-88 and MOWIOL 18-88, which are each commercially available from Kuraray Europe GmbH, Division PVA/PVB D-65926 Frankfurt am Main, Germany. A commercially available PVOH which is particularly preferred for its low viscosity and good stability for use in the present invention is MOWIOL 4-88, which is a partially hydrolyzed PVOH (polyvinylalcohol) in granular form, having a viscosity DIN 53015 of 4 ± 0.5 mPa-s (4% aqueous solution at 20 °C), a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O). Preferably, the PVOH employed as a colloidal stabilizer for achieving excellent dispersibility and redispersibility of the epoxy resin is a partially hydrolyzed PVOH, such as MOWIOL 4-88 and MOWIOL 18-88.

The colloidal stabilizer, such as polyvinyl alcohol alone, or in combination with another colloidal stabilizer may be employed in an amount such that the polyvinyl alcohol is at least 2% by weight, preferably from 5% by weight to 35% by weight, more preferably from 6% by weight to 25% by weight, based upon the weight of the thermosettable epoxy resin. It has been found that if the amount of the polyvinyl alcohol is below 2% by weight, redispersibility of the spray dried powder decreases and lumping may occur.

Exemplary of other protective colloids which may employed with the polyvinyl alcohol; are polyvinyl acetals; polyvinylpyrrolidones; polysaccharides in water-soluble form, e.g. starches (amylose and amylopectin), celluloses and their carboxymethyl, methyl, hydroxyethyl and hydroxypropyl derivatives; proteins such as casein or caseinate, soy protein, gelatins; lignin sulfonates; synthetic polymers such as poly(meth)acrylic acid, copolymers of (meth)acrylates with carboxyl-functional comonomer units, poly(meth)acrylamide, polyvinylsulfonic acids and their water-soluble copolymers; melamine formaldehyde sulfonates, naphthaleneformaldehyde sulfonates, and styrene-maleic acid and vinyl ether-maleic acid copolymers. However, use of a polyvinyl alcohol alone is preferred for use as the colloidal stabilizer in the present invention.

An epoxy resin is generally not produced as an aqueous dispersion. It is rather necessary to convert any liquid or semi-solid or solid epoxy resin into an aqueous dispersion by well-known methods and apparatus such as mechanical dispersion or melt kneading, or any other methods and apparatus of high shear technology. The methods and apparatus employed may provide heat and/or shear to heat an epoxy above its T_{g} to make a liquid epoxy for preparing the aqueous dispersion. Exemplary methods for preparing stable aqueous epoxy resin dispersions are described in U.S. Patent Application Publication No.-2010/0174016 to Michalski et al, especially in paragraphs [0030] - [0031], and U.S. Patent Application Publication No. 2007/0292705 to Monela et al, especially in paragraph [0032], the disclosures of which are each incorporated herein in their entireties. Methods of mechanical dispersion that can be applied herein are also disclosed in, for example, U.S. Patent Nos. 3,360,599, 3,503917, 4,123,403, 5,037,864, and 5,539,021, the disclosures of which are each herein incorporated by reference in their entireties. Surfactants may be needed to prepare the epoxy resin dispersion. Exemplary surfactants which may employed are disclosed in U.S. Patent Application Publication No.-2010/0174016. Exemplary of mechanical dispersion equipment which may be employed is a pressurized high shear device such as a PARR reactor (manufactured by The Parr Instrument Company, Moline Illinois) with high shear mixing blades e.g. Cowles blades, a modified extruder system, or rotor stator device. For example, a PARR stainless steel pressure reactor with a Cowles blade, or stirrer blade with serrated teeth, equipped with an optional pulley system to allow mixer speeds of up to 1830 rpm, or more, and heating and cooling devices may be employed to make the aqueous dispersions of epoxy resin and PVOH. The epoxy resin and an aqueous solution of the PVOH may be charged into the PARR pressure reactor. An aqueous solution of the interfacial crosslinking agent may also be charged to the reactor, and/or it may be admixed with the dispersion of epoxy resin and PVOH prior to spray drying. The reactor may be sealed and heated to heat the epoxy resin above its T_{g} and produce a liquid epoxy, for example to 100°C, or more. After reaching the temperature the mixture may be stirred for a sufficient amount of time to allow sufficient mixing of the epoxy resin and PVOH solution, and any interfacial crosslinking agent added to the reactor, for example, at about 1830 rpm. To this mixture water may be added using a HPLC pump, to obtain a substantially homogeneous mixture. Water addition may be continued while cooling the reactor by air and water, down to a temperature of, for example 50 °C, with stirring being maintained during the cooling process, to obtain a substantially homogeneous dispersion. The resultant dispersion may be collected by filtration through a 190 µm filter. Also, in accordance with the present invention, an epoxy dispersion may be made by extrusion of the epoxy resin and polyvinyl alcohol (PVOH). For example, an aqueous solution of polyvinyl alcohol may be delivered to the initial water (IA) injector of an extruder, such as a Bersdorff extruder. The epoxy resin may be fed to the extruder using a loss-in-weight feeder. An aqueous solution of the interfacial crosslinking agent may also be fed to the extruder, and/or it may be admixed with the dispersion of epoxy resin and PVOH prior to spray drying. The melt zone of the extruder may be maintained below the softening temperature of the epoxy resin to prevent epoxy resin flakes from caking at the bottom of the feed throat and the melt seal from rupturing. The barrel temperatures may be set substantially above the T_{g} of the epoxy resin, e.g. they may be all initially set to 130 °C, and subsequently reduced. For example, a melt zone temperature of 75 °C, an emulsification zone of 110 °C and a dilution zone of 100 °C may be employed to produce the smallest amount of grit.

In accordance with the present invention, the thermosettable epoxy resin may have an average particle size of from 0.05µm to 5µm, preferably from 0.1µm to 3µm, most preferably from 0.15µm to 2µm. The solids content of the epoxy resin dispersion may generally be from 30% by weight to 75% by weight.

In embodiments of the invention, the colloidal stabilizer may be admixed with the thermosettable epoxy resin before and/or during formation of the aqueous dispersion of the thermosettable epoxy resin. Also, the interfacial crosslinking agent may be admixed with the thermosettable epoxy resin before and/or during formation of the aqueous dispersion of the thermosettable epoxy resin. The interfacial crosslinking agent may be added separately from, together with or preblended with the colloidal stabilizer for admixture with the thermosettable epoxy resin. Additional stabilizer and/or additional interfacial crosslinking agent may be added to the aqueous dispersion after the aqueous dispersion is formed. For example, in embodiments of the invention, all or a portion of the colloidal stabilizer may be admixed with the thermosettable epoxy resin before formation of the aqueous dispersion, and any remaining portion of the colloidal stabilizer, or additional colloidal stabilizer, either the same or different from the previously added colloidal stabilizer, may be admixed with the thermosettable epoxy resin after formation of an aqueous dispersion of the resin. Likewise, in embodiments of the invention, all or a portion of the interfacial crosslinking agent may be admixed with the thermosettable epoxy resin before formation of the aqueous dispersion, and any remaining portion of the interfacial crosslinking agent, or additional interfacial crosslinking agent, either the same or different from the previously added interfacial crosslinking agent, may be admixed with the thermosettable epoxy resin after formation of an aqueous dispersion of the resin. In preferred embodiments, especially for producing smaller sized particles, the aqueous mixture of the thermosettable epoxy resin is obtained by mechanical dispersion of the thermosettable epoxy resin and at least a portion of the colloidal stabilizer to obtain an epoxy resin dispersion, and admixing the epoxy resin dispersion with the interfacial crosslinking agent and any remaining portion of the colloidal stabilizer. In other preferred embodiments, especially for producing larger sized particles, the aqueous mixture of the thermosettable epoxy resin is obtained by mechanical dispersion of the thermosettable epoxy resin, at least a portion of the colloidal stabilizer, and at least a portion of the interfacial crosslinking agent to obtain an epoxy resin dispersion without hardening, or curing of the crosslinkable epoxy resin, and admixing the crosslinkable epoxy resin dispersion with any remaining portion of the interfacial crosslinking agent and any remaining portion of the colloidal stabilizer.

In accordance with the present invention, the thermosettable epoxy resin in the aqueous dispersion which is to be spray dried may have an average particle size of from 0.05µm to 5µm, preferably from 0.1µm to 3µm, most preferably from 0.15µm to 2µm.

The redispersible polymer powder of the present invention is prepared from an aqueous dispersion comprising the thermosettable epoxy resin, the colloidal stabilizer comprising the polyvinyl alcohol, the interfacial crosslinking agent ,and optional components. The aqueous dispersions, which refers generically to a stable dispersion or emulsion of polymer microparticles in an aqueous medium, obtained in the present invention may generally have a solids content of from 30% to 75% by weight, for example between 35% and 65% by weight, preferably from 40% to 60% by weight.

To prepare the redispersible polymer powder the aqueous dispersion is dried, for example by spray drying, freeze drying or fluidized-bed drying. Preferably the aqueous dispersion is spray dried. The solids content of the dispersion to be spray-dried may generally be from 25% to 65% by weight, for example from 35% by weight to 55% by weight, preferably from 40% to 50% by weight, based on the total weight of the dispersion. In embodiments of the invention, since colloidal stabilizer is already included during the dispersion process, for example during the mechanical dispersion, it may not be necessary to add additional colloidal stabilizer to the dispersion for spray drying. In other embodiments, spray drying may be performed after addition of the colloidal stabilizer comprising the polyvinyl alcohol during the dispersion process to form a dispersion, and then for spray drying, additional PVOH and/or any optional additional one or more protective colloids may be added to the PVOH containing dispersion as a spraying aid to the dispersion. Any additional colloidal stabilizer added to the dispersion for spray drying, is preferably in the form of an aqueous solution. Addition can proceed in any manner as long as a homogenous dispersion mixture is obtained. Further additives such as surfactants and defoamers, and fillers may be employed, if desired, and the further additives are preferably added in conventional amounts to the aqueous dispersion before drying. For example, an antifoamer may be employed in an amount of up to 1.5% by weight, based on the weight of the polymer particles. In embodiments of the invention, conventional superplasticizers may be employed in an amount of at least 0.01% by weight, preferably from 5% by weight to 15% by weight, based upon the weight of the water redispersible polymer powder (RDP).

The spray drying can take place in conventional spray drying systems, for example a dispersion may be atomized by using single, twin or multifluid nozzles or a rotating disk in a stream of drying gas which may be heated. In general, air, nitrogen or nitrogen enriched air is employed as the drying gas, the drying gas temperature generally not exceeding 250°C. The drying temperature preferably is from 110 to 180°C, more preferably from 130 to 170°C. The product outlet temperature may generally be from 30°C to 120°C, preferably from 40°C to 90°C, depending on the plant, the T_{g} of the polymeric composition, and the desired degree of drying.

An anticaking agent (antiblocking agent) may be added to the polymer powder to increase storage stability, for example in order to prevent caking and blocking and/or to improve the flow properties of the powder. This addition is preferably carried out as long as the powder is still finely dispersed, for example still suspended in the drying gas. The anticaking agent is preferably of mineral origin. It is preferably added in an amount of up to 40% by weight, based on the total weight of polymeric constituents. Examples of anticaking agents include but are not limited to kaolin, calcium carbonate, magnesium carbonate, talc, gypsum, silica and silicates, and mixtures thereof. The particle sizes of the anticaking agents are preferably in the range of from 100nm to 10µm. A preferred anticaking agent is kaolin.

The X50 size of the particle size distribution of the redispersible powder depends on drying conditions and drying equipment. X50 represents the median diameter in micrometers, which means that 50% by weight of the particles are smaller than this diameter. The produced water-redispersible polymer powder preferably has an X50 particle size diameter of from 5 to 100 micrometers, preferably from 20 to 90 micrometers, most preferably from 50 to 80 micrometers. The particle size distribution of the powder can be measured by laser diffraction using a particle size analyzer "Sympatec Helos" at a measuring range of 1.8 - 350 µm and dispersing the powder by compressed air.

The weight of the polymer particles in the powder, for example, weight of the thermosettable epoxy resin described herein in the powder, may preferably be from 40% by weight to 95% by weight, more preferably from 65% by weight to 85% by weight, of the total weight of the water-redispersible polymer powder.

The redispersible polymer powders, which may have an average particle size of from 5 to 100 micrometers, for example from 10µm to 25µm particle size, may be readily dispersed into deionized water to provide an original thermosettable epoxy resin particle size distribution, such as from 0.05µm to 5µm, preferably from 0.1µm to 3µm, most preferably from 0.15µm to 2µm.

The redispersible polymer powder of the present invention can easily be redispersed in water and the reactivity of the epoxy resin is not influenced negatively by the high temperatures during the drying process. The easy redispersibility of the polymer powder and the possibility .of the epoxy resin to harden under alkaline conditions without the necessity to add an epoxy resin hardener makes the polymer powder ideal as an additive to a variety of building materials to improve their hydraulic stability and other mechanical and chemical properties, such as compression, abrasion resistance, chemical and solvent resistance. In embodiments of the invention, although curing of the redispersible epoxy powder by cement ingredients is preferred, a hardener or curing agent, such as a polyfunctional amine, mercaptan, polyfunctional acid, or acid anhydride, may be dry mixed with the spray dried powder, or incorporated into a cement-epoxy powder in conventional effective curing amounts.

The building materials generally comprise an inorganic hydraulic binding agent. Thus, the present invention is also directed to a composition comprising an inorganic hydraulic binding agent and the redispersible powder as described above. Typically, the inorganic hydraulic binding agent is cement or calcium sulfate hemihydrate (plaster of Paris), preferably cement. Examples of suitable cements include Portland cement, alumina cement, pozzolanic cement, slag cement, magnesia cement and phosphate cement. As the epoxy resin in the redispersible polymer powder is preferably cured by cement ingredients without the addition of an epoxy resin curing agent such as an amine, mercaptan, anhydride or acid curing agent, the composition comprising an inorganic hydraulic binding agent and the redispersible powder may be free of any curing agent, such as an amine curing agent, for the epoxy resin.

The ability to add an epoxy resin to a building material in the form of the present redispersible polymer powder provides a composition which is a ready-to-use dry mix. The redispersible polymer powder can already be mixed with the hydraulic binding agent and additional components such, as for example, sand to produce a one-component system for the end user. At the construction site only water has to be added and no annoying dosing of other ingredients is necessary. In embodiments of the invention, the composition which includes an inorganic hydraulic binding agent and the redispersible powder may result in a pH of at least 11 after addition of water. The alkaline environment then causes curing of the epoxy resin contained in the composition. In addition to PVOH, additional surfactants may be used to help the dispersion of the epoxy resin, such as E-SPERSE 100, a high temperature active surfactant available from Ethox Chemicals LLC, Greenville, SC 29606

The hardener-free compositions of the present invention exhibit superior storage stability as no additional hardener that may already react undesirably during storage is present. Typical building materials wherein the redispersible polymer powder of the present invention may be used are one-component hardener-free dry mixes containing an inorganic hydraulic binding agent, preferably a one-component hardener-free cement-containing dry mix. More specific illustrative examples of building materials wherein the redispersible polymer powder can be used include mortars, tile or board adhesives, gypsum or cement plasters or renders, decorative renders, self-leveling flooring compositions, one-component sealants and exterior insulation finishing systems. The corresponding hardened building materials obtained from materials including the redispersible polymer powder of the present invention exhibit good adhesion strength also after immersion in water (water resistance), chemical resistance, and stain resistance.

The water-redispersible polymer powder compositions of the present invention have a variety of uses. In embodiments of the invention, the thermosettable, curable, or hardenable epoxy resin redispersible polymer powder compositions of the present invention may be employed in blends with one or more acrylic redispersible polymer powders (RDPs), VAE RDPs, VAE/VeoVA RDPs, polyurethane RDPs, polyolefin dispersion based RDPs, and mixtures thereof. The powders of the present invention may be employed as functional additives in a wide variety of compositions such as construction materials, personal care compositions, pharmaceutical compositions, and agricultural compositions, in high salt concentration applications or environments, such as off-shore oil well cementing, oil and gas drilling and cementing, and in hard water. Additional uses of the powders are in waste management applications, such as compositions for synthetic covers for bulk material piles, such as waste, coal sludge containment, soil, soil erosion control, which minimize water infiltration, nuisance fugitive dust, odor, and affinity to birds. The powders may be used in alternative landfill covers that are sprayable, use inexpensive widely available and environmentally friendly recycled materials, have good adherence to plastics and glass waste, and can form/harden within a short time, and in adhesion enhancing admixtures. The powders may also be employed in the production of foams, such as polyurethane foams.

Preferably, the water-redispersible polymer powder may be used as an additive in a setting composition which may further include an inorganic hydraulic binder. Examples of inorganic binders include cements, such as Portland cement, alumina cement, pozzolanic cement, slag cement, magnesia cement and phosphate cement; gypsum hemihydrate and water-glass. Illustrative uses of the polymer composition according to the present invention are in tile adhesives, construction adhesives, renders, joint mortars, plasters, troweling compositions, filling compositions, such as floor filling compositions (e.g. self-leveling flooring compounds), concrete repair joints, joint mortars, tape joint compounds, concrete, water proofing membrane applications, crack isolation membrane applications, and additives for ceramic processing. In particular, the use of the water-redispersible polymer powder described herein in a setting composition, e.g. in cement-based tile adhesives or in external thermal insulation composite systems, result in compositions with high initial adhesion strength, high adhesion strength after immersion in water (water resistance), chemical resistance, stain resistance, and high adhesion strength after allowing a certain "open time" before final application of the hydrated setting composition. In embodiments of the invention, the water-redispersible polymer powder may be employed as a binder for slip casting, of for example raw materials such as silica, alumina, alkali metal oxides, and alkaline earth metal oxides.

A preferred use of the water-redispersible polymer powder is in cementicious or hydraulic compositions or other compositions which exhibit a high pH, for example a pH of at least 11, for example from 11.5 to 13.5. The redispersible polymer powders of the present invention may be employed in mortar repair or grout compositions, tile adhesives, such as cement-based tile adhesives. Cement-based tile adhesives may generally comprise 5 to 50 parts by weight of cement, preferably Portland cement, as the hydraulic binder; 40 to 70 parts by weight of quartz sand, preferably having a particle size of from 0.1mm to 0.5mm, as the main filler, and 0.1% to 10% by weight, preferably 1% to 6% by weight (based on the dry weight of the tile adhesive) of the redispersible polymer powder composition according to the present invention. Further optional components include one or more cellulose ethers (preferably in a total amount of 0.05% to 1% by weight, more preferably 0.2% to 0.5% by weight, based on the dry weight of the tile adhesive) to control rheology, water retention, slip resistance and improved workability; quartz or lime stone powder having a particle size of from 30µm to 60µm as fine co-filler to improve consistency and workability; and cellulose or mineral fibers to improve the slip resistance.

Another use of the water-redispersible polymer powders is in self- leveling flooring compounds SLFC. The powders may be added to improve the adhesion to the substrate, the flexibility, the abrasion resistance and the aging properties. The SLFC may generally include the same components in the same amounts as employed in the CBTAs. A retarder or retardant, such as trisodium citrate (TriNa-Citrate), such as Censperse PC13 available from Newchem AG, Pfäffikon, Switzerland, may be employed in conventional amounts generally employed in SLFC. The SLFC may also include calcium sulfate (gypsum), an accelerator, such as lithium carbonate, and a liquefier, dispersant, or superplasticizer, such as a water soluble co-polymer dispersant, such as MELFLUX 2651F, which is based on modified polycarboxylate technology and produced by BASF Construction Polymers, Kennesaw GA, in conventional amounts. In other embodiments, the water-redispersible polymer powder may be used in external thermal insulation systems ETICS, particularly as an adhesive on the thermally insulating board layer to reduce the water absorption and improve the impact resistance of the external thermal insulation system.

Furthermore, the water-redispersible polymer powder according to the present invention may be used in paper products, paperboard products, carpet backing, paints or coatings or in binders for wood, paper or textiles coatings or impregnating compositions, preferably in the absence of a substantial amount of an inorganic hydraulic binding agent, more preferably in the absence of any amount of an inorganic hydraulic binding agent. For example, the water-redispersible polymer powder may be used as the sole binder in coating compositions and adhesives. In embodiments of the invention, the water redispersible polymer powders may be used in automotive applications.

The following examples are provided for illustrative purposes only and are not intended to limit the scope of the claims that follow. Unless otherwise indicated, all parts and percentages are by weight, all temperatures are in °C, and all pressures are in bars or atmospheric unless otherwise indicated to the contrary:

### EXAMPLE 1

A redispersible polymer powder was produced by first preparing an aqueous dispersion of a thermosettable, non-crosslinked, non-hardened epoxy resin, which may be partially or interfacially hardened during the dispersion preparation. The aqueous dispersion was prepared by charging: a) 50 gm of D.E.R. 661 epoxy resin, b) 27.0g of MOWIOL 4-88 polyvinyl alcohol (PVOH) solution (non-volatiles content, NV=27% by weight), which is about 14.6% by weight PVOH based upon the weight of the epoxy resin, and c) a solution of taurine (0.38 g of taurine dissolved in 3mL of 1 M NaOH solution), which is about 0.76% by weight taurine based upon the weight of the epoxy resin, into a 300ml PARR pressure reactor equipped with a Cowles stirrer blade.

The reactor was sealed and heated to 100°C, and after attaining that temperature the mixture was stirred for 10 minutes to mix the epoxy, the PVOH solution, and the taurine solution together at about 1830 rpm to obtain a substantially homogeneous mixture. To this mixture, water was added using a HPLC pump at the rate of 1ml/minute for 30 minutes. The water addition rate was increased to 10ml/ minute for the next 5 minutes while the heating mantle was removed, and the PARR reactor was cooled by a water bath. Water addition was with stirring to obtain a substantially homogeneous mixture. The reactor was cooled to about 50°C before turning off stirring. The epoxy resin dispersion was collected by filtration through a 190µm filter for spray drying. The final thermosettable epoxy dispersion had the composition shown in Table 1:

**TABLE 1: Composition of Thermosettable Epoxy Dispersion for Spray Drying**

| D.E.R. 661, epoxy resin | 50g |
|---|---|
| PVOH (MOWIOL 4-88) solids relative to epoxy resin | 14.6% by weight |
| Interfacial Crosslinking Agent, (costabilizer amine salt) | Taurine sodium |
| Amine Solid Mass, solids relative to epoxy resin | 0.76% by weight |

The final thermosettable epoxy dispersion of D.E.R. 661 was pumped to a two-fluid nozzle atomizer equipped on a Mobile Minor spray dryer. The mixture has a total solids content of about 30-50% by weight, based upon the total weight of the mixture. The air pressure to the nozzle was fixed at 1 bar with 50% flow which is equivalent to 6 kg/hr of air flow. The spray drying was conducted in an N₂ environment with an inlet temperature fixed at 120°C, and the outlet temperature was targeted to 40 ± 1 °C by tuning the feed rate of the mixture. Concurrently, kaolin powder (KaMin Hg 90) was added into the chamber as an anti-caking agent, with the amount being controlled to be 10% by weight of the dry powder.

The redispersible polymer powder obtained by the spray drying had an average particle size between 10µm to 20µm.

The spray dried powder was redispersed into deionized water at 1% solids and vortexed for 30 seconds twice. The redispersion was then measured by use of a Coulter LS 230 particle size analyzer. Through the spray drying, free flowing powders were collected in collection jars, and limited chamber deposition was observed. The particle size distribution of the thermosettable epoxy resin in the initial dispersion, which was prior to spray drying, had a mean particle size of 1.6µm. The redispersibility is defined as the volume fraction of particles that are less than the upper particle size limit in the original dispersion (e.g. 6µm). In this example, greater than 93.5% of the particles were dispersed to the original thermosettable epoxy resin or latex particle size distribution, or the redispersibility was 93.5%. In addition, the T_{g} of the RDP was about 39°C which is similar to the 41°C T_{g} of the original epoxy resin D.E.R. 661, indicating that the RDP was not cured during its production. In a comparative example, a D.E.R. 661 powder produced under the same conditions except an interfacial reaction with the taurine interfacial crosslinking agent was not employed, showed less than 20% redispersibility, where the redispersibility is defined as the volume percentage of epoxy particles below 2 micron in the re-dispersion.

### EXAMPLE 2

A redispersible polymer powder was produced by first preparing an aqueous dispersion of a thermosettable, non-crosslinked, non-hardened epoxy resin using D.E.R. 661 epoxy resin and MOWIOL 4-88 polyvinyl alcohol. The aqueous dispersion was prepared by charging: a) 50 gm of D.E.R. 661 epoxy resin, and b) 18.0g of MOWIOL 4-88 polyvinyl alcohol solution (non-volatiles content, NV=27% by weight) into a 300ml PARR pressure reactor equipped with a Cowles stirrer blade.

The reactor was sealed and heated to 100°C, and after attaining that temperature the mixture was stirred for 10 minutes to mix the epoxy, and the PVOH solution together at about 1830 rpm to obtain a substantially homogeneous mixture. To this mixture, water was added using a HPLC pump at the rate of 1ml/minute for 30 minutes. The water addition rate was increased to 10ml/ minute for the next 5 minutes while the heating mantle was removed, and the PARR reactor was cooled by air and water. Water addition was with stirring to obtain a substantially homogeneous mixture. The reactor was cooled to about 50°C before turning off stirring. The resultant epoxy resin dispersion was collected by filtration through a 190µm filter. To 50ml of the D.E.R. 661 dispersion, 0.33g of glycine sodium salt dissolved in 4 ml of water was added and stirred at room temperature for 3 days. Then, 11.0g of MOWIOL 4-88 polyvinyl alcohol solution (solids content = 15% by weight) was added into the dispersion prior to spray drying. The final thermosettable epoxy dispersion had the composition shown in Table 2:

**TABLE 2: Composition of Thermosettable Epoxy Dispersion for Spray Drying**

| D.E.R. 661, epoxy resin | 50g |
|---|---|
| PVOH (MOWIOL 4-88) solids relative to epoxy resin | 15% by weight |
| Interfacial Crosslinking Agent, (costabilizer amine salt) | Glycine sodium |
| Amine Solid Mass, solids relative to epoxy resin | 2.5% by weight |

The final thermosettable epoxy dispersion of D.E.R. 661 was pumped to a two-fluid nozzle atomizer equipped on a Mobile Minor spray dryer. The mixture has a total solids content of about 30-50% by weight, based upon the total weight of the mixture. The air pressure to the nozzle was fixed at 1 bar with 50% flow which is equivalent to 6 kg/hr of air flow. The spray drying was conducted in an N₂ environment with an inlet temperature fixed at 120°C. The outlet temperature was targeted to 40 ± 1°C. Concurrently, kaolin powder (KaMin Hg 90) was added into the chamber as an anti-caking agent, with the amount being controlled to be 10% by weight of the dry powders.

The redispersible polymer powders obtained by the spray drying had an average particle size between 10µm to 20µm.

The spray dried powders were redispersed into deionized water at 1% solids and vortexed for 30 seconds twice. The redispersion was then measured by use of a Coulter LS 230 particle size analyzer. Through the spray drying, free flowing powders were collected in collection jars, and limited chamber deposition was observed. The particle size distribution of the thermosettable epoxy resin in the initial dispersion, which was prior to spray drying, had an average particle diameter of about 0.33µm. The particle size of the redispersion, which was after spray drying and redispersing the RDP in water, shows a redispersibility of 97%. The redispersibility is defined as the volume fraction of particles that are less than the upper particle size limit in the original dispersion (e.g. 6µm). In this example, greater than 97% of the particles were dispersed to the original thermosettable epoxy resin or latex particle size distribution, or the redispersibility was 97%. The data indicated that these powders were mostly dispersed to the original thermosettable epoxy resin or latex particle size distribution. In addition, the T_{g} of the RDP was about 40°C which is similar to the 41 °C T_{g} of the original epoxy resin D.E.R. 661, indicating that the RDP was not cured during its production. In comparative examples, D.E.R. 661 powders produced under the same conditions except an interfacial reaction with the glycine interfacial crosslinking agent was not employed, showed less than 20% redispersibility, where the redispersibility is defined as the volume percentage of epoxy particles below 2 micron in the re-dispersion.

### EXAMPLE 3

To 100 mL of a DER661/PVOH dispersion prepared as in Example 2, 4 wt% polyacrylic acid in partial or full sodium salt form (relative to solid epoxy resin) was dissolved in water and added at room temperature prior to spray drying. Spray drying was conducted as in Example 2 with Tₒᵤₜ=40°C. The particle size distribution of the thermosettable epoxy resin in the initial dispersion, which was prior to spray drying, had a mean particle size of about 0.34µm. The particle size of the redispersion, which was after spray drying and redispersing the RDP in water, shows a redispersibility of 96.1%. The redispersibility is defined as the volume fraction of particles that are less than the upper particle size limit in the original dispersion (e.g. 6µm). In this example, greater than 96.1% of the particles were dispersed to the original thermosettable epoxy resin or latex particle size distribution, or the redispersibility was 96.1%, where the redispersibility is defined as the volume percentage of epoxy particles below 2 micron in the re-dispersion.

### EXAMPLE 4

The components and their relative amounts (% by weight or parts by weight, pbw) which may be used to prepare a cement-based mortar composition using the redispersible powder composition of Example 1, Example 2, or Example 3 is shown in Table 3, below. The cement-based mortar composition may be prepared by dry blending the solid components indicated in Table 3, and then adding water. The cement and the redispersible polymer powder may be placed in a 150 ml labor glass and mixed with a spatula for a half minute. Then water may be added and stirred with the spatula for 3 minutes. The temperature during the mixing may be 21°C.

**TABLE 3: Cement-based Mortar Formulation**

| RAW INGREDIENT | FORMULA, WT% |
|---|---|
| Portland Cement Type 1 42.5 | 95 |
| Redispersible Epoxy Polymer Powder (RDP) of Example 1, Example 2, or Example 3 | 5 |
| Total Dry Mix, % by weight | 100 |
| Water | 37 |

The admixing with the water may cause the Portland Cement to harden, cure, or crosslink the epoxy resin of the RDP to enhance hydraulic stability and other mechanical and chemical properties, such as compression, abrasion resistance, chemical and solvent resistance of the cement-based mortar formulation.

## Claims

1. A water redispersible polymer powder (RDP) comprising a co-dried admixture of a thermosettable epoxy resin, a colloidal stabilizer comprising a polyvinyl alcohol, and an interfacial crosslinking agent selected from a water soluble multifunctional small molecule with at most one reactive amine group or a water soluble multifunctional polymer having at least one charged group or ionic group, reactive with or having a strong attachment to an epoxy group, said thermosettable epoxy resin having a glass transition temperature (Tg) of less than 50°C, the amount of the polyvinyl alcohol being at least 2% by weight, based upon the weight of the thermosettable epoxy resin, and the amount of the interfacial crosslinking agent being at least 0.1% by weight, based upon the weight of the thermosettable epoxy resin, wherein the thermosettable epoxy resin comprises from 40 % by weight to 95% by weight of the total weight of the water redispersible polymer powder.

2. A water redispersible polymer powder as claimed in claim 1 wherein the amount of the interfacial crosslinking agent is from 0.3% by weight to 5% by weight, based upon the weight of the thermosettable epoxy resin.

3. A water redispersible polymer powder as claimed in claim 2 wherein the thermosettable epoxy resin has a glass transition temperature (Tg) of from 20°C to 40°C, and the amount of the polyvinyl alcohol is from 5% by weight to 35% by weight, based upon the weight of the thermosettable epoxy resin.

4. A water redispersible polymer powder as claimed in claim 1 which does not contain a curing agent or hardener for the epoxy dispersed throughout particles of thermosettable epoxy resin.

5. A water redispersible polymer powder as claimed in claim 1 wherein the interfacial crosslinking agent comprises at least one member selected from the group consisting of glycine, taurine, polyacrylic acid, polymethacrylic acid, polyvinylphosphonic acid, polystyrene sulfonic acid, polyacrylamide, water soluble copolymers thereof, and salts thereof.

6. A method for producing a water redispersible polymer powder comprising drying an aqueous mixture of a thermosettable epoxy resin having a glass transition temperature (T_{g}) of less than 50°C, a colloidal stabilizer comprising a polyvinyl alcohol, and an interfacial crosslinking agent selected from a water soluble multifunctional small molecule with at most one reactive amine group or a water soluble multifunctional polymer having at least one charged group or ionic group, reactive with or having a strong attachment to an epoxy group, to obtain a water redispersible polymer powder without curing or hardening of the epoxy resin throughout powder particles of the epoxy resin, the amount of the polyvinyl alcohol being at least 2% by weight, based upon the weight of the thermosettable epoxy resin, and the amount of the interfacial crosslinking agent being at least 0.1% by weight, based upon the weight of the thermosettable epoxy resin, wherein the thermosettable epoxy resin comprises from 40% by weight to 95% by weight of the total weight of the water redispersible polymer powder.

7. A method for producing a water redispersible polymer powder as claimed in claim 6 wherein the aqueous mixture is obtained by mechanical dispersion of an admixture of the thermosettable epoxy resin, an aqueous solution of the colloidal stabilizer, and an aqueous solution of the interfacial crosslinking agent.

8. A method for producing a water redispersible polymer powder as claimed in claim 6 wherein the aqueous mixture is obtained by mechanical dispersion of the thermosettable epoxy resin and at least a portion of the colloidal stabilizer to obtain an epoxy resin dispersion, and admixing the epoxy resin dispersion with the interfacial crosslinking agent and any remaining portion of the colloidal stabilizer.

9. A method for making a cement composition comprising admixing cement ingredients with a water redispersible polymer powder as claimed in claim 1.

10. A dry mix composition comprising cement ingredients and a water redispersible polymer powder as claimed in claim 1 in an amount of at least 0.1% by weight, based upon the weight of the dry mix formulation.

## Patentansprüche

1. Ein in Wasser redispergierbares Polymerpulver (RDP), das ein cogetrocknetes Gemisch eines hitzehärtbaren Epoxidharzes, eines einen Polyvinylalkohol beinhaltenden kolloidalen Stabilisators und eines Grenzflächenvernetzers, ausgewählt aus einem wasserlöslichen mehrfunktionellen kleinen Molekül mit maximal einer reaktiven Amingruppe oder einem wasserlöslichen mehrfunktionellen Polymer mit mindestens einer geladenen Gruppe oder ionischen Gruppe, die mit einer Epoxidgruppe reaktionsfähig ist oder eine starke Bindung an diese aufweist, beinhaltet, wobei das hitzehärtbare Epoxidharz eine Glasübergangstemperatur (Tg) von weniger als 50 °C aufweist, wobei die Menge des Polyvinylalkohols, bezogen auf das Gewicht des hitzehärtbaren Epoxidharzes, mindestens 2 Gew.-% beträgt, und die Menge des Grenzflächenvernetzers, bezogen auf das Gewicht des hitzehärtbaren Epoxidharzes, mindestens 0,1 Gew.-% beträgt, wobei das hitzehärtbare Epoxidharz von 40 Gew.-% bis 95 Gew.-% des Gesamtgewichts des in Wasser redispergierbaren Polymerpulvers beinhaltet.

2. In Wasser redispergierbares Polymerpulver gemäß Anspruch 1, wobei die Menge des Grenzflächenvernetzers, bezogen auf das Gewicht des hitzehärtbaren Epoxidharzes, von 0,3 Gew.-% bis 5 Gew.-% beträgt.

3. In Wasser redispergierbares Polymerpulver gemäß Anspruch 2, wobei das hitzehärtbare Epoxidharz eine Glasübergangstemperatur (Tg) von 20 °C bis 40 °C aufweist, und die Menge des Polyvinylalkohols, bezogen auf das Gewicht des hitzehärtbaren Epoxidharzes, von 5 Gew.-% bis 35 Gew.-% beträgt.

4. In Wasser redispergierbares Polymerpulver gemäß Anspruch 1, das für das Epoxid, das durch die Partikel des hitzehärtbaren Epoxidharzes hindurch dispergiert ist, kein Aushärtungsmittel oder Härtemittel enthält.

5. In Wasser redispergierbares Polymerpulver gemäß Anspruch 1, wobei der Grenzflächenvernetzer mindestens ein Element beinhaltet, das aus der Gruppe ausgewählt ist, die aus Glycin, Taurin, Polyacrylsäure, Polymethacrylsäure, Polyvinylphosphonsäure, Polystyrolsulfonsäure, Polyacrylamid, wasserlöslichen Copolymeren davon und Salzen davon besteht.

6. Ein Verfahren zum Herstellen eines in Wasser redispergierbaren Polymerpulvers, das das Trocknen einer wässrigen Mischung eines hitzehärtbaren Epoxidharzes mit einer Glasübergangstemperatur (T_{g}) von weniger als 50 °C, eines kolloidalen Stabilisators, beinhaltend einen Polyvinylalkohol, und eines Grenzflächenvernetzers, ausgewählt aus einem wasserlöslichen mehrfunktionellen kleinen Molekül mit maximal einer reaktiven Amingruppe oder einem wasserlöslichen mehrfunktionellen Polymer mit mindestens einer geladenen Gruppe oder ionischen Gruppe, die mit einer Epoxidgruppe reaktionsfähig ist oder eine starke Bindung an diese aufweist, beinhaltet, um ein in Wasser redispergierbares Polymerpulver ohne Aushärten oder Härten des Epoxidharzes durch Pulverpartikel des Epoxidharzes hindurch zu erhalten, wobei die Menge des Polyvinylalkohols, bezogen auf das Gewicht des hitzehärtbaren Epoxidharzes, mindestens 2 Gew.-% beträgt, und die Menge des Grenzflächenvernetzers, bezogen auf das Gewicht des hitzehärtbaren Epoxidharzes, mindestens 0,1 Gew.-% beträgt, wobei das hitzehärtbare Epoxidharz von 40 Gew.-% bis 95 Gew.-% des Gesamtgewichts des in Wasser redispergierbaren Polymerpulvers beinhaltet.

7. Verfahren zum Herstellen eines in Wasser redispergierbaren Polymerpulvers gemäß Anspruch 6, wobei die wässrige Mischung durch mechanisches Dispergieren eines Gemischs des hitzehärtbaren Epoxidharzes, einer wässrigen Lösung des kolloidalen Stabilisators und einer wässrigen Lösung des Grenzflächenvernetzers erhalten wird.

8. Verfahren zum Herstellen eines in Wasser redispergierbaren Polymerpulvers gemäß Anspruch 6, wobei die wässrige Mischung durch mechanisches Dispergieren des hitzehärtbaren Epoxidharzes und mindestens eines Teils des kolloidalen Stabilisators, um eine Epoxidharzdispergierung zu erhalten, und das Vermischen der Epoxidharzdispergierung mit dem Grenzflächenvernetzer und einem beliebigen verbleibenden Teil des kolloiden Stabilisators erhalten wird.

9. Ein Verfahren zum Herstellen einer Zementzusammensetzung, das das Vermischen von Zementbestandteilen mit einem in Wasser redispergierbaren Polymerpulver gemäß Anspruch 1 beinhaltet.

10. Eine Trockengemischzusammensetzung, die Zementbestandteile und ein in Wasser redispergierbares Polymerpulver gemäß Anspruch 1 in einer Menge von mindestens 0,1 Gew.-%, bezogen auf das Gewicht der Trockengemischformulierung, beinhaltet.

## Revendications

1. Une poudre de polymère redispersable dans l'eau (RDP) comprenant un mélange additionnel coséché d'une résine époxy thermodurcissable, d'un stabilisant colloïdal comprenant un poly(alcool vinylique), et d'un agent de réticulation interfaciale sélectionné parmi une petite molécule multifonctionnelle soluble dans l'eau avec au plus un groupe amine réactif ou un polymère multifonctionnel soluble dans l'eau ayant au moins un groupe chargé ou groupe ionique, réactif avec ou ayant une forte liaison à un groupe époxy, ladite résine époxy thermodurcissable ayant une température de transition vitreuse (T_{g}) inférieure à 50 °C, la quantité du poly(alcool vinylique) étant au moins de 2 % en poids, rapporté au poids de la résine époxy thermodurcissable, et la quantité de l'agent de réticulation interfaciale étant au moins de 0,1 % en poids, rapporté au poids de la résine époxy thermodurcissable, la résine époxy thermodurcissable représentant de 40 % en poids à 95 % en poids du poids total de la poudre de polymère redispersable dans l'eau.

2. Une poudre de polymère redispersable dans l'eau telle que revendiquée dans la revendication 1 dans laquelle la quantité de l'agent de réticulation interfaciale va de 0,3 % en poids à 5 % en poids, rapporté au poids de la résine époxy thermodurcissable.

3. Une poudre de polymère redispersable dans l'eau telle que revendiquée dans la revendication 2 dans laquelle la résine époxy thermodurcissable a une température de transition vitreuse (T_{g}) allant de 20 °C à 40 °C, et la quantité du poly(alcool vinylique) va de 5 % en poids à 35 % en poids, rapporté au poids de la résine époxy thermodurcissable.

4. Une poudre de polymère redispersable dans l'eau telle que revendiquée dans la revendication 1 qui ne contient pas d'agent de réticulation ou de durcisseur pour l'époxy dispersé à travers des particules de résine époxy thermodurcissable.

5. Une poudre de polymère redispersable dans l'eau telle que revendiquée dans la revendication 1 dans laquelle l'agent de réticulation interfaciale comprend au moins un élément sélectionné dans le groupe constitué de la glycine, de la taurine, du poly(acide acrylique), du poly(acide méthacrylique), du poly(acide vinylphosphonique), du poly(acide styrène sulfonique), du polyacrylamide, de copolymères de ceux-ci solubles dans l'eau, et de sels de ceux-ci.

6. Une méthode de production d'une poudre de polymère redispersable dans l'eau comprenant le fait de sécher un mélange aqueux d'une résine époxy thermodurcissable ayant une température de transition vitreuse (T_{g}) inférieure à 50 °C, d'un stabilisant colloïdal comprenant un poly(alcool vinylique), et d'un agent de réticulation interfaciale sélectionné parmi une petite molécule multifonctionnelle soluble dans l'eau avec au plus un groupe amine réactif ou un polymère multifonctionnel soluble dans l'eau ayant au moins un groupe chargé ou groupe ionique, réactif avec ou ayant une forte liaison à un groupe époxy, afin d'obtenir une poudre de polymère redispersable dans l'eau sans cuisson ou durcissement de la résine époxy à travers des particules de poudre de la résine époxy, la quantité du poly(alcool vinylique) étant au moins de 2 % en poids, rapporté au poids de la résine époxy thermodurcissable, et la quantité de l'agent de réticulation interfaciale étant au moins de 0,1 % en poids, rapporté au poids de la résine époxy thermodurcissable, la résine époxy thermodurcissable représentant de 40 % en poids à 95 % en poids du poids total de la poudre de polymère redispersable dans l'eau.

7. Une méthode de production d'une poudre de polymère redispersable dans l'eau telle que revendiquée dans la revendication 6 dans laquelle le mélange aqueux est obtenu par dispersion mécanique d'un mélange additionnel de la résine époxy thermodurcissable, d'une solution aqueuse du stabilisant colloïdal, et d'une solution aqueuse de l'agent de réticulation interfaciale.

8. Une méthode de production d'une poudre de polymère redispersable dans l'eau telle que revendiquée dans la revendication 6 dans laquelle le mélange aqueux est obtenu par dispersion mécanique de la résine époxy thermodurcissable et d'au moins une portion du stabilisant colloïdal afin d'obtenir une dispersion de résine époxy, et par mélange additionnel de la dispersion de résine époxy avec l'agent de réticulation interfaciale et toute portion restante du stabilisant colloïdal.

9. Une méthode de fabrication d'une composition cimentaire comprenant le fait de mélanger de manière additionnelle des ingrédients cimentaires avec une poudre de polymère redispersable dans l'eau telle que revendiquée dans la revendication 1.

10. Une composition de mélange sèche comprenant des ingrédients cimentaires et une poudre de polymère redispersable dans l'eau telle que revendiquée dans la revendication 1 en une quantité d'au moins 0,1 % en poids, rapporté au poids de la formulation de mélange sèche.
